# EUROPÄISCHE PATENTANMELDUNG

(11) **EP 1 953 410 A1**
(43) Veröffentlichungstag der Anmeldung: **06.08.2008**
(21) Anmeldenummer: 07018057.5
(22) Anmeldetag: 14.09.2007
(51) Int. Cl.: F16F 9/46

(54) **Hydraulischer Schwingungsdämpfer**

(30) Priorität: 02.02.2007 DE 102007005288
(71) Anmelder: ThyssenKrupp Bilstein Suspension GmbH, 58256 Ennepetal (DE)
(72) Erfinder: Weimann, Claus, 58300 Wetter (DE)
(74) Vertreter: Albrecht, Rainer Harald

(57) **Zusammenfassung**

Die Erfindung betrifft einen hydraulischen Schwingungsdämpfer (1) mit einem Zylinder (2), der mit einem Dämpfungsmedium (D) gefüllt ist, einen an einer Kolbenstange (3) angeordneten und von dem Dämpfungsmedium (D) durchströmbaren Arbeitskolben (4) verschiebbar aufnimmt und von dem Arbeitskolben (4) in zwei Kammern (5, 5') geteilt ist. Die Anordnung umfasst ferner einen Ausgleichsraum (9), der über ein Bodenventil (8) an die kolbenstangenferne Kammer (5') angeschlossen ist, einen an die kolbenstangenseitige Kammer (5) angeschlossenen Druckkanal (10) sowie ein an den Druckkanal (10) und den Ausgleichsraum (9) angeschlossenes steuerbares Stellventilmodul (12). Das Stellventilmodul (12) weist eine Vorsteuerventilanordnung mit einer Vorsteuerdruckkammer (19) und einem Vorsteuerventil (20) auf, wobei erfindungsgemäß die Vorsteuerdruckkammer (19) von einem in Ablaufrichtung öffnenden Hauptventil (18) hydraulisch getrennt und über einen Verbindungskanal (21) und zumindest eine Drosselstelle (22) an einen zulaufseitigen Ventilraum (17) angeschlossen ist. Ein von der Vorsteuerdruckkammer (19) druckbeaufschlagtes Druckelement (23) wirkt der Öffnung des Hauptventils (18) entgegen, wobei der über das Druckelement (23) auf das Hauptventil (18) wirkende Druck durch das Vorsteuerventil (20) variierbar ist.

## Beschreibung

Die Erfindung betrifft einen hydraulischen Schwingungsdämpfer, insbesondere für Kraftfahrzeuge, mit
einem Zylinder, der mit einem Dämpfungsmedium gefüllt ist, einen an einer Kolbenstange angeordneten und von dem Dämpfungsmedium durchströmbaren Arbeitskolben verschiebbar aufnimmt und von dem Arbeitskolben in eine kolbenstangenseitige Kammer und eine kolbenstangenferne Kammer geteilt ist,
einem Ausgleichsraum, der über ein Bodenventil an die kolbenstangenferne Kammer angeschlossen ist,
einem an die kolbenstangenseitige Kammer angeschlossenen Druckkanal und
einem steuerbaren Stellventilmodul, welches mit einer Zulauföffnung an den Druckkanal und mit einer Ablauföffnung an den Ausgleichsraum angeschlossen ist,
wobei das Stellventilmodul einen zulaufseitigen Ventilraum und einen ablaufseitigen Ventilraum aufweist, die durch ein Hauptventil getrennt sind, und wobei das Hauptventil durch eine Vorsteuerventilanordnung, die eine Vorsteuerdruckkammer und ein Vorsteuerventil aufweist, steuerbar ist.

Ein hydraulischer Schwingungsdämpfer mit den eingangs beschriebenen Merkmalen ist aus der Druckschrift DE 197 22 216 C2 bekannt. Das Stellventilmodul wird sowohl bei einer auswärtsgerichteten Zugbewegung der Kolbenstange als auch bei einer einwärtsgerichteten Druckbewegung der Kolbenstange stets mit derselben Flussrichtung durchströmt. Die Dämpfungsflüssigkeit strömt bei Bewegungen des Arbeitskolbens aus der kolbenstangenseitigen Arbeitskammer in den Druckkanal, durchströmt das Stellventilmodul und tritt in den Ausgleichsraum ein, der hydraulisch mit der kolbenstangenfernen Arbeitskammer verbunden ist. Das Stellventilmodul weist einen unmittelbar mit einer Feder beaufschlagten Absperrventilkörper auf, wobei der zulaufseitige Ventilraum auf der einen Seite des Absperrventilkörpers über eine Bohrung als Drosselstelle mit der Vorsteuerdruckkammer verbunden ist. An die Vorsteuerdruckkammer ist ein an einem Schieber angeordnetes Vorsteuerventil angeschlossen. Bei einer Öffnung des Vorsteuerventils sinkt der Druck in der Vorsteuerkammer, so dass das Hauptventil bei einem geringen Überdruck geöffnet wird. Um die Stellung des Vorsteuerventils zu steuern, ist eine Elektromagnetanordnung vorgesehen. Das Vorsteuerventil erlaubt zwar eine Verstellung der Dämpfungscharakteristik, darüber hinausgehend sind die Eigenschaften des Stellventilmoduls, beispielsweise das dynamische Verhalten des Hauptventils bei Öffnungs- und Schließbewegungen, der funktionale Zusammenhang zwischen dem Druck in der Vorsteuerventilkammer und der Durchflussrate oder auch der maximal erreichbare Durchfluss konstruktionsbedingt festgelegt, wobei eine Anpassung an unterschiedliche Anwendungsfälle, beispielsweise der Einsatz bei verschiedenen Kraftfahrzeugen, konstruktiv aufwendige Änderungen des Stellventilmoduls erfordert.

Vor diesem Hintergrund liegt der Erfindung die Aufgabe zugrunde, einen steuerbaren Schwingungsdämpfer anzugeben, der leicht an unterschiedliche Anwendungsfälle angepasst werden kann.

Ausgehend von einem Schwingungsdämpfer mit den eingangs beschriebenen Merkmalen wird die Erfindung dadurch gelöst, dass die Vorsteuerdruckkammer von dem in Ablaufrichtung öffnenden Hauptventil hydraulisch getrennt sowie über einen Verbindungskanal und zumindest einer Drosselstelle an den zulaufseitigen Ventilraum angeschlossen ist, dass ein von der Vorsteuerdruckkammer druckbeaufschlagtes Druckelement der Öffnungsbewegung des Hauptventils entgegenwirkt und dass der über das Druckelement auf das Hauptventil wirkende Druck durch das Vorsteuerventil steuerbar ist.

Erfindungsgemäß wirkt der in der Vorsteuerdruckkammer herrschende Druck nicht direkt, sondern über das Druckelement auf ein Ventilelement des Hauptventils, wodurch bei der Auslegung des Schwingungsdämpfers die hydraulisch wirksamen Flächen für die Öffnungs- und Schließkräfte auf besonders einfache Weise weitgehend unabhängig voneinander variiert werden können. Der Schwingungsdämpfer ist dabei im Rahmen der Erfindung als ein so genanntes Umpumpersystem ausgelegt, wobei aufgrund der unterschiedlichen Durchflusswiderstände von Bodenventil und Arbeitskolben einerseits und der Volumenänderung bei dem Ein- und Ausfahren der Kolbenstange andererseits das Stellventilmodul stets nur in einer Richtung von der Zulauföffnung zu der Ablauföffnung durchströmt wird.

In einer bevorzugten Ausgestaltung der Erfindung sind der zulaufseitige Ventilraum und der ablaufseitige Ventilraum um ein Schiebergehäuse herum angeordnet, in welchem ein Schieber zur Steuerung des Vorsteuerventils längsbeweglich geführt ist. Vorzugsweise weist das Stellventilmodul abgesehen von Anschluss- und Durchgangsbohrungen einen im Wesentlichen zylindrischen Aufbau auf. Bei einem solchen Aufbau kann das Stellventilmodul besonders leicht aus Einzelteilen zusammengefügt und durch Austausch von standardisierten Teilen den Erfordernissen entsprechend angepasst werden.

Mit dem Schieber kann die Öffnungsposition des Vorsteuerventils verstellt werden, wobei das Vorsteuerventil beispielsweise als Sitzventil oder in einer bevorzugten Ausgestaltung der Erfindung als Schieberventil ausgeführt sein kann.

Zur Bewegung des Schiebers ist vorzugsweise eine Tauchspulenanordnung vorgesehen. Der Schieber kann beispielsweise an einer elektrischen Spule befestigt sein, die mit einem Permanentmagneten zusammenwirkt, wobei durch eine Änderung des Spulenstroms und damit des durch die Spule erzeugten Magnetfeldes in Wechselwirkung mit dem Permanentmagneten eine exakte Zustellung ermöglicht wird. Die Zustellung erfolgt bevorzugt gegen die Kraft einer Schieberfeder, wobei im stromlosen Zustand der Tauchspulenanordnung das Vorsteuerventil in eine Notposition bewegt wird. In dieser Notposition ist das Vorsteuerventil zumindest weitgehend geschlossen, wobei sich dann in der Notposition eine harte Dämpfungscharakteristik einstellt, die ein sicheres Fahrverhalten gewährleistet. Zur Bewegung des Schiebers ist im Rahmen der vorliegenden Erfindung ohne Einschränkung auch eine Elektromagnetenanordnung mit einer feststehenden Spule und einem Hubmagneten geeignet. Die Tauchspulenanordnung zeichnet sich aber im besonderen Maße durch eine vergleichsweise geringe Leistungsaufnahme, eine geringe Baugröße, eine gute Steuerbarkeit und eine geringe Verschleißneigung aus.

Gemäß einer bevorzugten Ausgestaltung weist der Schieber eine Vielzahl von Öffnungen auf, die derart angeordnet sind, dass bei geschlossenem Vorsteuerventil ein Druckausgleich zwischen den verschiedenen Abschnitten des Schiebers gewährleistet ist. Insbesondere bei einer Ausgestaltung des Vorsteuerventils als Schieberventil kann der Schieber mit äußerst geringen Stellkräften verschoben werden, so dass eine entsprechend schwache Ausgestaltung des Aktuators zur Veränderung der Schieberstellung ausreichend ist.

Im Rahmen der Erfindung kann allgemein auch ein elastisches Element vorgesehen sein, welches zusätzlich zu dem hydraulischen Druck in der Vorsteuerkammer einer Öffnungsbewegung des Hauptventils entgegenwirkt. So ist in einer bevorzugten Ausgestaltung der Erfindung in der Vorsteuerdruckkammer eine Ventilfeder angeordnet, die auf das Druckelement wirkt und gemeinsam mit dem in der Vorsteuerdruckkammer herrschenden Druck der Öffnung des Hauptventils entgegenwirkt. Durch die Auswahl einer geeigneten Ventilfeder kann die Öffnungs- und Schließcharakteristik des Hauptventils zusätzlich zu einer Variation der in Öffnungsrichtung bzw. Schließrichtung wirkenden Flächen entsprechend den Erfordernissen eingestellt werden.

Für das Ventilelement des Hauptventils ergeben sich zahlreiche vorteilhafte Ausgestaltungsmöglichkeiten. Im Rahmen einer ersten Ausgestaltung der Erfindung ist das Ventilelement eine einfache starre, vorzugsweise ebene Platte, die beim Öffnen des Hauptventils vollständig von einem zugeordneten Ventilsitz abgehoben wird. Im Rahmen einer zweiten Ausgestaltung der Erfindung ist als Ventilelement eine Federscheibenanordnung mit zumindest einer elastischen Federscheibe vorgesehen. Eine Federscheibenanordnung zeichnet sich durch eine günstige Durchflusscharakteristik aus, da der von der Durchbiegung der Federscheibenanordnung abhängige Durchfluss eine empfindliche Funktion des Differenzdruckes ist. Darüber hinaus kann bei einer Federscheibenanordnung die druckabhängige Durchflussrate durch die Vorspannung, die Dicke, den Durchmesser und die Materialauswahl einzelner Federscheiben für verschiedene Druckbereiche exakt angepasst werden. Des Weiteren können unterschiedliche Federscheiben kombiniert werden. Insbesondere durch unterschiedliche Kombinationen von Federscheiben ist eine einfache Anpassung des gesamten Stellventilmoduls auf unterschiedliche Anwendungen möglich. So können für verschiedene Einsatzzwecke des Stellventilmoduls, beispielsweise bei Schwingungsdämpfern für unterschiedliche Fahrzeugtypen, unterschiedliche Sätze von Federscheiben standardmäßig bereitgehalten werden.

Das Druckelement kann als Ringkolben ausgebildet sein, der an seinem Außenumfang und seinem Innenumfang verschiebbar geführt und abgedichtet ist. Abhängig von dem Druck in der Vorsteuerdruckkammer und der über das Hauptventil auf das Druckelement wirkenden Kraft kann der Ringkolben als Druckelement frei in der Vorsteuerdruckkammer gleiten. Der Ringkolben ist dabei bevorzugt aus einem starren, formstabilen Material gebildet. Im Rahmen einer alternativen Ausgestaltung ist vorgesehen, dass das Druckelement an seinem Innenumfang um eine feste Einspannung elastisch beweglich und an seinem Außenumfang verschiebbar geführt und abgedichtet ist. Das Druckelement kann beispielsweise auch als gummierte Federscheibe mit integrierten Dichtelementen an der Innenseite und Außenseite ausgeführt sein.

Im Rahmen der Erfindung kann das Druckelement flächig auf das Hauptventil bzw. das Ventilelement des Hauptventils wirken. In einer bevorzugten Ausführung der Erfindung ist vorgesehen, dass das Druckelement zumindest eine Stützkante oder einen Stützabschnitt aufweist, um eine definierte Krafteinleitung von dem Druckelement auf das Hauptventil zu gewährleisten. Die Anordnung einer Stützkante oder eines Stützabschnittes an dem Druckelement ist besonders vorteilhaft bei einer elastischen Ausgestaltung des Ventilelementes des Hauptventils, beispielsweise einer Federscheibenanordnung. Durch die Form, die radiale Anordnung und den Verlauf der zumindest einen Stützkante bzw. des zumindest einen Stützabschnittes ergeben sich weitere Möglichkeiten um das Öffnungs- und Schließverhalten sowie den druckabhängigen Verlauf der Durchflussrate genau einzustellen. Insbesondere gewährleistet die Anordnung zumindest einer Stützkante oder zumindest eines Stützabschnittes ein klar definiertes und reproduzierbares Verhalten des Hauptventils.

Die Charakteristik des Vorsteuerventils kann im Rahmen der vorliegenden Erfindung weitgehend frei gewählt werden. So kann beispielsweise bei einer Ausgestaltung des Vorsteuerventils als in einem Schiebergehäuse angeordneten Schieberventils vorgesehen sein, dass die Schiebersteuerkante eine Kontur aufweist. Zusätzlich oder alternativ kann vorgesehen sein, dass die Ventilöffnungen in dem Schiebergehäuse als Quer- oder Längsschlitze mit unterschiedlicher Breite und/oder Länge ausgeführt sind. Möglich ist auch die Anordnung von Einzelbohrungen entlang des Stellweges des Schieberventils, wodurch eine quasi stufenförmige Verstellung ermöglicht wird. Durch die beschriebenen Maßnahmen kann insbesondere bei kleinen Volumenströmen die Kennliniencharakteristik des Vorsteuerventils genau eingestellt werden.

Die Erfindung wird im Folgenden anhand einer lediglich ein Ausführungsbeispiel darstellenden Zeichnung näher erläutert. Es zeigen schematisch:
- **Fig. 1**: einen hydraulischen Schwingungsdämpfer mit einem steuerbaren Stellventilmodul;
- **Fig. 2**: eine Detailansicht des Stellventilmoduls in einer Schnittdarstellung;
- **Fig. 3**: eine alternative Ausgestaltung des Stellventilmoduls und
- **Fig. 4**: eine weitere alternative Ausgestaltung einer Vorsteuerventilkammer mit einem Druckelement des Stellventilmoduls.

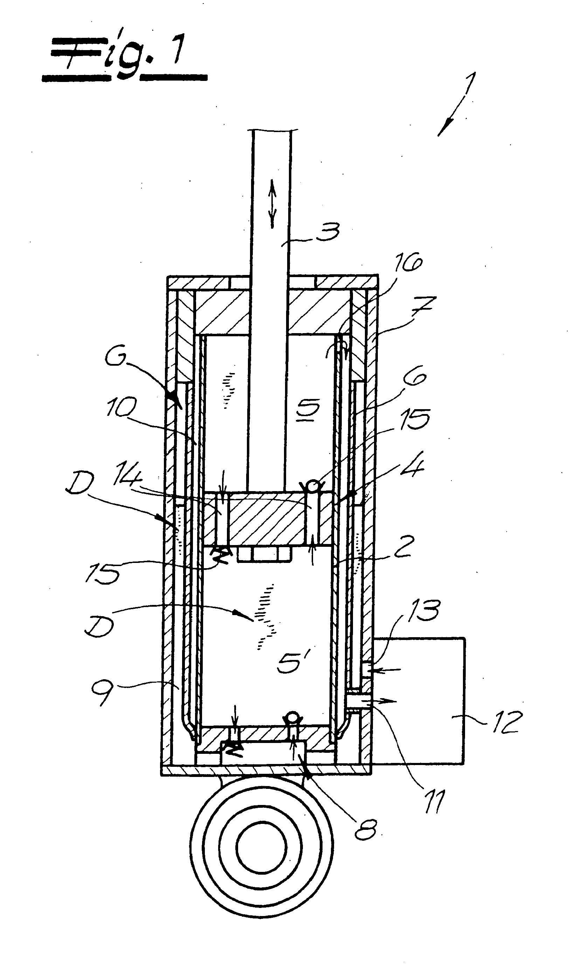

Fig. 1 zeigt den Aufbau eines erfindungsgemäßen Schwingungsdämpfers 1 mit einem Zylinder 2, der mit einem Dämpfungsmedium D gefüllt ist, einen an einer Kolbenstange 3 angeordneten und von dem Dämpfungsmedium D durchströmbaren Arbeitskolben 4 verschiebbar aufnimmt und von dem Arbeitskolben 4 in eine kolbenstangenseitige Kammer 5 und eine kolbenstangenferne Kammer 5' geteilt ist. Der Zylinder 2 ist von einem Innenrohr gebildet, welches von einem Mittelrohr 6 und einem Außenrohr 7 umgeben ist. Die kolbenstangenferne Kammer 5' ist über ein Bodenventil 8 an dem Zylinder 2 mit einem Ausgleichsraum 9 verbunden, der zwischen dem Außenrohr 7 und dem Mittelrohr 6 gebildet ist. Der Ausgleichsraum 9 ist mit einem Druckgas G beaufschlagt und ermöglicht einen Ausgleich des durch das Einfahren und Ausfahren der Kolbenstange 3 variablen Volumens in dem Zylinder 2. Die kolbenstangenseitige Kammer 5 ist über einen zwischen dem Innenrohr und dem Mittelrohr 6 gebildeten Druckkanal 10 an die Zulauföffnung 11 eines steuerbaren Stellventilmoduls 12 angeschlossen. Eine Ablauföffnung 13 des Stellventilmoduls 12 ist an den Ausgleichsraum 9 angeschlossen. Bei einer Zugbewegung (Zugstufe) an der Kolbenstange 3 wird der Druck in der kolbenstangenseitigen Kammer 5 erhöht und in der kolbenstangenfernen Kammer 5' verringert, so dass das Dämpfungsmedium D zum Druckausgleich durch einen Kanal 14 und ein Ventilelement 15 des Arbeitskolbens 4 fließt. Bei einem zumindest teilweise geöffneten Stellventilmodul 12 kann ein Teil des Dämpfungsmediums D auch durch eine Bohrung 16, den Druckkanal 10 und das Stellventilmodul 12 in den Ausgleichsraum 9 fließen, wodurch insgesamt eine Absenkung der Dämpfungskraft des Schwingungsdämpfers 1 erreicht wird. Bei einer Druckbewegung wird der Druck in der kolbenstangenfernen Kammer 5' erhöht, wobei jedoch auch durch das Einschieben der Kolbenstange 3 das für das Dämpfungsmedium D zur Verfügung stehende Volumen in dem Zylinder 2 insgesamt verringert wird. Da der Durchflusswiderstand des Arbeitskolbens 4 geringer ist als der des Bodenventils 8, steigt auch bei der Druckbewegung (Druckstufe) der Druck in der kolbenstangenseitigen Kammer 5 an. Bei einem zumindest teilweise geöffneten Stellventilmodul 12 kann auch bei der Druckstufe ein Teil des Dämpfungsmediums D durch den Druckkanal 10 abfließen. Durch eine Durchflusssteuerung an dem Stellventilmodul 12 können die Dämpfungskennlinien für die Zugstufe und die Druckstufe genau eingestellt werden.

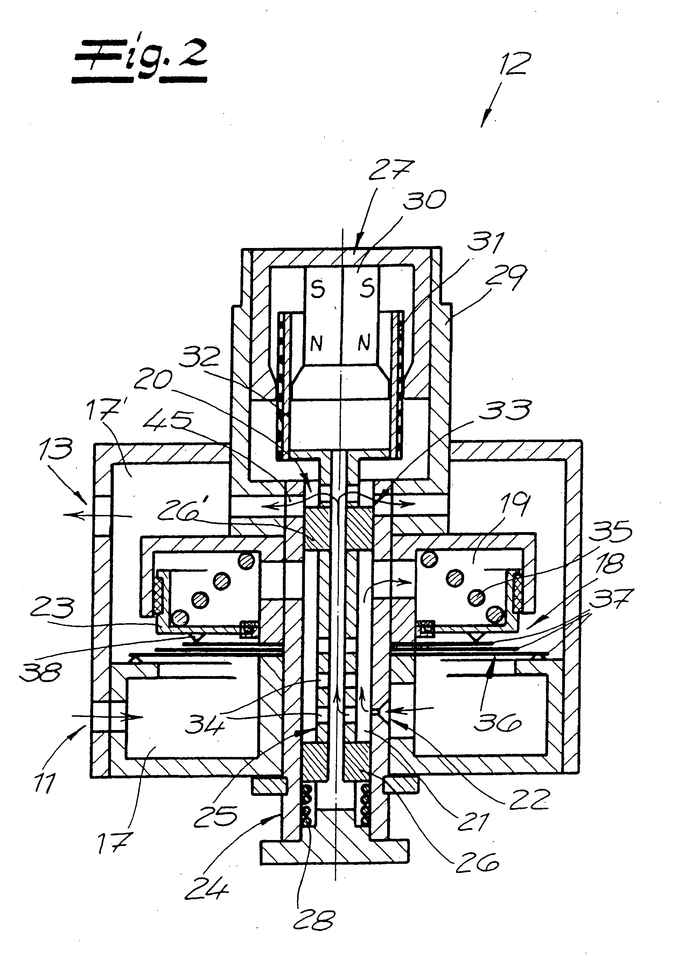

Fig. 2 zeigt den Aufbau des Stellventilmoduls 12 in einer Schnittdarstellung. Das Stellventilmodul 12 weist einen zulaufseitigen Ventilraum 17 und einen ablaufseitigen Ventilraum 17' auf, die durch ein Hauptventil 18 getrennt sind,
wobei das Hauptventil 18 durch eine Vorsteuerventilanordnung mit einer Vorsteuerdruckkammer 19 und einem Vorsteuerventil 20 steuerbar ist. Die Vorsteuerdruckkammer 19 ist von dem in Ablaufrichtung öffnenden Hauptventil 18 hydraulisch getrennt und über einen Verbindungskanal 21 und zumindest eine Drosselstelle 22 an den zulaufseitigen Ventilraum 17 angeschlossen. An der Vorsteuerdruckkammer 19 ist ein Druckelement 23 angeordnet. Der in der Vorsteuerdruckkammer 19 herrschende hydraulische Druck wirkt dabei über das Druckelement 23 der Öffnungsbewegung des Hauptventils 18 entgegen, wobei der Druck in der Vorsteuerdruckkammer 19 durch das Vorsteuerventil 20 steuerbar ist. Das seitlich an das Außenrohr 7 angeschlossene Stellventilmodul 12 ist bis auf Durchflussbohrungen und Anschlussöffnungen im Wesentlichen zylindrisch ausgeführt, wobei der zulaufseitige Ventilraum 17 und der ablaufseitige Ventilraum 17' um ein Schiebergehäuse 24 angeordnet sind, in welchem ein Schieber 25 zur Steuerung des Vorsteuerventils 20 längsbeweglich geführt ist. Der Schieber 25 weist eine zulaufseitige Führung 26 und eine ablaufseitige Führung 26' auf, wobei die ablaufseitige Führung 26' auch ein Teil des als Schieberventil ausgeführten Vorsteuerventils 20 bildet. An die Drosselstelle 22 schließt in dem Schiebergehäuse 24 der Verbindungskanal 21 an, der zu der Vorsteuerdruckkammer 19 führt und im Vergleich zu der Drosselstelle 22 einen großen Querschnitt aufweist. Der Verbindungskanal 21 ist in keiner Stellung des Schiebers 25 verschlossen, wobei aufgrund des großen Querschnitts des Verbindungskanals 21 innerhalb des Schiebergehäuses 24 und der Vorsteuerdruckkammer 19 stets in etwa der gleiche Druck vorliegt. Der längsbewegliche Schieber 25 zur Steuerung des Vorsteuerventils 20 ist mit einer Tauchspulenanordnung 27 als Aktuator gegen die Kraft einer Schieberfeder 28 verstellbar. Die Tauchspulenanordnung 27 weist einen, an einem Gehäuse 29 des Stellventilmoduls 12 befestigten Permanentmagneten 30 und eine Tauchspule 31 auf, die über einen Spulenträger 32 direkt mit dem Schieber 25 verbunden ist. Eine zusätzliche Lagerung des als Tauchspulenanordnung 27 ausgeführten Aktuators ist nicht erforderlich, wobei auch ein Verkanten des Schiebers 25 oder der Tauchspule 31 vermieden werden kann. Bei einer stromlosen Tauchspule 31 wird der Schieber 25 von der Schieberfeder 28 in eine Notposition bewegt, wobei das Vorsteuerventil 20 vollständig oder zumindest weitgehend geschlossen ist. Der Schieber 25 weist eine Mehrzahl von Öffnungen 34 auf, die derart angeordnet sind, dass bei einem geschlossenen Vorsteuerventil 20 ein Druckausgleich zwischen den verschiedenen Abschnitten des Schiebers 25 gewährleistet ist. Aufgrund des Druckausgleichs zu allen Seiten des Schiebers 25 und im Gehäuse des Aktuators wirken auf den Schieber 25 und den damit verbundenen Spulenträger 32 keine hydraulischen Differenzkräfte, so dass vorgespannte Dichtungen, die zu einer erhöhten Reibung führen, nicht notwendig sind. Aufgrund des Druckausgleichs und der geringen Reibung an den Führungen 26, 26' können kleine Aktuatoren mit einem geringen Stromverbrauch und mit einer hohen Dynamik eingesetzt werden.

Bei einem geschlossenen Vorsteuerventil 20 herrscht in dem zulaufseitigen Ventilraum 17 der gleiche Druck wie in der Vorsteuerdruckkammer 19, in der auch eine Ventilfeder 35 angeordnet ist. Die Ventilfeder 35 wirkt gemeinsam mit der in der Vorsteuerdruckkammer 19 herrschenden Druck der Öffnungsbewegung des Hauptventils 18 entgegen, so dass das Hauptventil 18 zumindest bei einem üblichen Druck verschlossen ist. Das Stellventilmodul 12 kann aber so ausgelegt werden, dass das Hauptventil 18 auch bei einem geschlossenen Vorsteuerventil 20, bei Druckspitzen öffnen kann. Durch die Öffnungsstellung des Vorsteuerventils 20 können der Differenzdruck, bei dem das Hauptventil 18 öffnet, und die druckabhängige Durchflussrate genau eingestellt werden. In der in Fig. 2 dargestellten Ausgestaltung weist das Hauptventil 18 als Ventilelement 36 eine Federscheibenanordnung mit drei Federscheiben 37 auf. Durch die Kombination verschiedener Federscheiben 37 kann die Kennlinie des Hauptventils 18 für verschiedene Öffnungs- und Druckbereiche genau angepasst werden. Das Druckelement 23 ist gemäß der Fig. 2 als Ringkolben ausgebildet, der an seinem Außenumfang und seinem Innenumfang verschiebbar geführt und abgedichtet ist. Das Druckelement 23 wirkt über eine umlaufende Stützkante 38 auf die Federscheibenanordnung des Hauptventils 18, wodurch eine definierte Krafteinleitung gewährleistet ist. Auch eine Variation der Form und der Anordnung der Stützkante 38 kann zu einer Optimierung der Charakteristik des Stellventilmoduls 12 genutzt werden.

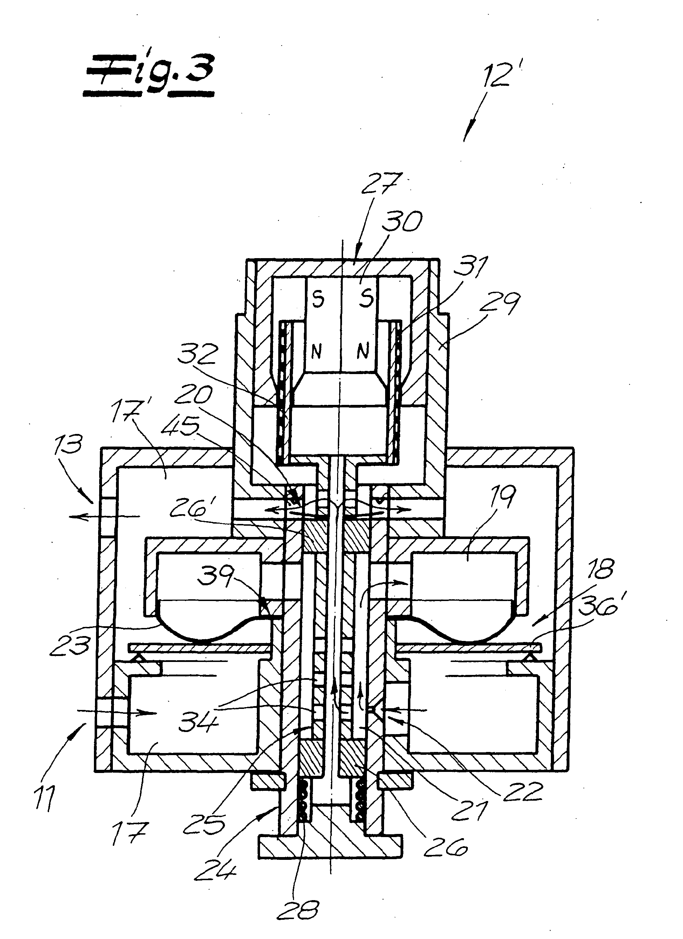

Fig. 3 zeigt eine alternative Ausgestaltung des steuerbaren Stellventilmoduls 12'. Das Vorsteuerventil 20 ist hier nicht als Schieberventil sondern als Tellerventil ausgebildet. Darüber hinaus weist das Hauptventil 18 als Ventilelement 36' eine starre, ringförmige Scheibe auf, die längsbeweglich an dem Schiebergehäuse 24 geführt ist. Das Druckelement 23 ist an seinem Innenumfang um eine feste Einspannung 39 elastisch beweglich und an seinem Außenumfang verschiebbar geführt und abgedichtet. Die weitere Ausgestaltung entspricht darüber hinaus der des in Fig. 2 dargestellten Ventilmoduls 12.

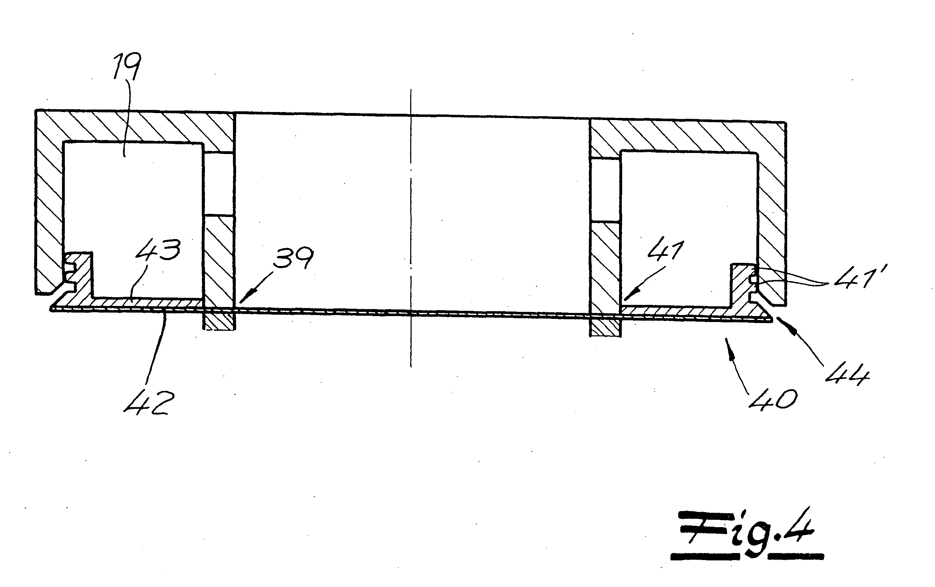

Fig. 4 zeigt eine weitere Ausgestaltung des Druckelementes. Das Druckelement 23 ist als gummierte Federscheibe 40 mit integrierten Dichtelementen 41, 41' an der Innenseite und der Außenseite ausgeführt. Die gummierte Federscheibe 40 weist ein Federblech 42 und in Richtung der Vorsteuerdruckkammer 19 eine Gummierung 43 auf. Die integrierten Dichtelemente 41, 41' an der Innenseite und der Außenseite sind aus der Gummierung 43 gebildet, wobei an dem äußeren Rand der gummierten Federscheibe 40 ein Anschlag 44 vorgesehen ist. Die gummierte Federscheibe 40 ist durch eine feste Einspannung 39 klemmend befestigt.

Um bei einer Ausgestaltung des Vorsteuerventils 20 als Schieberventil die Kennliniencharakteristik positiv zu beeinflussen, kann eine Variation der Form der Steuerkante 33 der ablaufseitigen Führung 26' und/oder eine spezielle Öffnungsgeometrie von Vorsteuerventilöffnung 45 in dem Schiebergehäuse 24 vorgesehen sein.

## Patentansprüche

1. Hydraulischer Schwingungsdämpfer, insbesondere für Kraftfahrzeuge, mit
einem Zylinder (2), der mit einem Dämpfungsmedium (D) gefüllt ist, einen an einer Kolbenstange (3) angeordneten und von dem Dämpfungsmedium (D) durchströmbaren Arbeitskolben (4) verschiebbar aufnimmt und von dem Arbeitskolben (4) in eine kolbenstangenseitige Kammer (5) und eine kolbenstangenferne Kammer (5') geteilt ist,
einem Ausgleichsraum (9), der über ein Bodenventil (8) an die kolbenstangenferne Arbeitskammer (5') angeschlossen ist,
einem an die kolbenstangenseitige Kammer (5) angeschlossenen Druckkanal (10) und
einem steuerbaren Stellventilmodul (12), welches mit einer Zulauföffnung (11) an dem Druckkanal (10) und mit einer Ablauföffnung (13) an den Ausgleichsraum (9) angeschlossen ist,
wobei das Stellventilmodul (12) einen zulaufseitigen Ventilraum (17) und einen ablaufseitigen Ventilraum (17') aufweist, die durch ein Hauptventil (18) getrennt sind und wobei das Hauptventil (18) durch eine Vorsteuerventilanordnung, die eine Vorsteuerdruckkammer (19) und ein Vorsteuerventil (20) aufweist, steuerbar ist,
**dadurch gekennzeichnet, dass** die Vorsteuerdruckkammer (19) von dem in Ablaufrichtung öffnenden Hauptventil (18) hydraulisch getrennt sowie über einen Verbindungskanal (21) und zumindest eine Drosselstelle (22) an den zulaufseitigen Ventilraum (17) angeschlossen ist, dass ein von der Vorsteuerdruckkammer (19) druckbeaufschlagtes Druckelement (23) der Öffnungsbewegung des Hauptventils (18) entgegenwirkt und dass der über das Druckelement (23) auf das Hauptventil (18) wirkende Druck durch das Vorsteuerventil (20) steuerbar ist.

2. Schwingungsdämpfer nach Anspruch 1, **dadurch gekennzeichnet, dass** der zulaufseitige Ventilraum (17) und der ablaufseitige Ventilraum (17') um ein Schiebergehäuse (24) herum angeordnet sind und dass ein Schieber (25) zur Steuerung der Durchlassöffnung des Vorsteuerventils (20) längsbeweglich in dem Schiebergehäuse (24) geführt ist.

3. Schwingungsdämpfer nach Anspruch 2, **dadurch gekennzeichnet, dass** dem Schieber (24) eine Tauchspulenanordnung (27) oder eine andersartig ausgebildete Elektromagnetanordnung zur Verstellung des Schiebers zugeordnet ist.

4. Schwingungsdämpfer nach Anspruch 3, **dadurch gekennzeichnet, dass** die Stellbewegung des Schiebers (24) gegen die Kraft einer Schieberfeder (28) erfolgt, wobei im stromlosen Zustand der Tauchspulenanordnung (27) bzw. Elektromagnetanordnung das Vorsteuerventil (20) zumindest weitgehend geschlossen ist.

5. Schwingungsdämpfer nach einem der Ansprüche 2 bis 4, **dadurch gekennzeichnet, dass** der Schieber (25) eine Vielzahl von Öffnungen (34) aufweist, die derart angeordnet sind, dass bei einem geschlossenen Vorsteuerventil (20) ein Druckausgleich zwischen den verschiedenen Abschnitten des Schiebers (25) gewährleistet ist.

6. Schwingungsdämpfer nach einem der Ansprüche 1 bis 5, **dadurch gekennzeichnet, dass** das Vorsteuerventil (20) als Schieberventil ausgebildet ist.

7. Schwingungsdämpfer nach einem der Ansprüche 1 bis 6, **dadurch gekennzeichnet, dass** in der Vorsteuerdruckkammer (19) eine Ventilfeder (35) angeordnet ist, die auf das Druckelement (23) wirkt und gemeinsam mit dem in der Vorsteuerdruckkammer (19) herrschenden Druck der Öffnungsbewegung des Hauptventils (18) entgegenwirkt.

8. Schwingungsdämpfer nach einem der Ansprüche 1 bis 7, **dadurch gekennzeichnet, dass** das Hauptventil (18) als Ventilelement (36, 36') eine starre Platte oder eine aus zumindest einer elastischen Federscheibe (37) gebildete Federscheibenanordnung aufweist.

9. Schwingungsdämpfer nach einem der Ansprüche 1 bis 8, **dadurch gekennzeichnet, dass** das Druckelement (23) als Ringkolben ausgebildet ist, der an seinem Außenumfang und seinem Innenumfang verschiebbar geführt und abgedichtet ist.

10. Schwingungsdämpfer nach einem der Ansprüche 1 bis 8, **dadurch gekennzeichnet, dass** das Druckelement (23) an seinem Innenumfang um eine feste Einspannung (39) elastisch beweglich und an seinem Außenumfang verschiebbar geführt und abgedichtet ist.

11. Schwingungsdämpfer nach Anspruch 10, **dadurch gekennzeichnet, dass** das Druckelement (23) als gummierte Federscheibe (40) mit integrierten Dichtungselementen (41, 41') an der Innenseite und an der Außenseite ausgeführt ist.

12. Schwingungsdämpfer nach einem der Ansprüche 1 bis 11, **dadurch gekennzeichnet, dass** das Druckelement (23) zumindest eine Stützkante (38) oder einen Stützabschnitt aufweist, um eine definierte Krafteinleitung von dem Druckelement (23) auf das Hauptventil (18) zu gewährleisten.
